# EUROPEAN PATENT APPLICATION

(11) **EP 4 817 963 A1**
(43) Date of publication of application: **07.10.2026**
(21) Application number: 26166051.8
(22) Date of filing: 19.03.2026
(51) Int. Cl.: B60R 16/03, B60R 25/01

(54) **VEHICLE CONTROL DEVICE, VEHICLE CONTROL METHOD, AND VEHICLE CONTROL PROGRAM**

(30) Priority: 04.04.2025 JP 2025062608
(71) Applicant: Toyota Jidosha Kabushiki Kaisha, Toyota-shi, Aichi-ken 471-8571 (JP)
(72) Inventor: Harada, Hiroshi, Toyota-shi, 471-8571 (JP)
(74) Representative: J A Kemp LLP

(57) **Abstract**

A control device of a vehicle 100 includes a control unit 331, 332 configured to control on and off of supply of electric power to at least one of electrical devices of the vehicle and on and off of at least one of in-vehicle functions whose operation is recognizable by an occupant of the vehicle. In a case where the supply of electric power to the electrical devices is on and the in-vehicle functions are on, when a driver's door of the vehicle is detected as opened, the control unit changes the in-vehicle functions to off while maintaining the supply of electric power to the electrical devices on.

## Description

### FIELD

The present disclosure relates to a vehicle control device, a vehicle control method, and a vehicle control program.

### BACKGROUND

Conventionally, there has been known a vehicle power supply device that cuts off power supply to a device relating to vehicle security when it is detected that a vehicle is located at a predetermined position, an ignition switch is off, and a vehicle door is locked (JP 2007-118665 A).

In the vehicle power supply device described in Patent Document 1, in order to cut off the supply of electric power to in-vehicle equipment except for the security-related device, it is necessary to turn off the ignition switch. Therefore, the vehicle power supply device described in Patent Document 1 has room for improvement in terms of convenience of the occupant or electric power consumption.

In view of the above problem, an object of the present disclosure is to improve convenience of the occupant or electric power consumption in power supply control of a vehicle.

### SUMMARY

The present disclosure includes the following aspects.
(1) A control device of a vehicle, the control device comprising:
   a control unit configured to control on and off of supply of electric power to at least one of electrical devices of the vehicle and on and off of at least one of in-vehicle functions whose operation is recognizable by an occupant of the vehicle, wherein
   in a case where the supply of electric power to the electrical devices is on and the in-vehicle functions are on, when a driver's door of the vehicle is detected as opened, the control unit changes the in-vehicle functions to off while maintaining the supply of electric power to the electrical devices on.
(2) The control device according to above (1), wherein the at least one of the electrical devices includes a device that implements the at least one of the in-vehicle functions.
(3) The control device according to above (1) or (2), wherein in a case where the supply of electric power to the electrical devices is on and the in-vehicle functions are on, when a door other than the driver's door of the vehicle is detected as opened, the control unit maintains the supply of electric power to the electrical devices and the in-vehicle functions on.
(4) The control device according to above (1) to (3), wherein in a case where the supply of electric power to the electrical devices is off, when the driver's door of the vehicle is detected as opened, the control unit changes the supply of electric power to the electrical devices and the in-vehicle functions to on.
(5) The control device according to above (1) to (4), wherein in a case where the supply of electric power to the electrical devices is off, when a door other than the driver's door of the vehicle is detected as opened, the control unit changes the supply of electric power to the electrical devices to on and sets the in-vehicle functions off.
(6) The control device according to above (1) to (5), wherein in a case where the supply of electric power to the electrical devices is on and the in-vehicle functions are off, when the driver's door of the vehicle is detected as opened, the control unit maintains the supply of electric power to the electrical devices on and changes the in-vehicle functions to on.
(7) The control device according to above (1) to (6), wherein in a case where the supply of electric power to the electrical devices is on and the in-vehicle functions are off, when a door other than the driver's door of the vehicle is detected as opened, the control unit maintains the supply of electric power to the electrical devices on and maintains the in-vehicle functions off.
(8) The control device according to above (1) to (7), wherein when a state in which the supply of electric power to the electrical devices is on and supply of electric power to a device that drives the vehicle is stopped continues for a predetermined time or longer, the control unit changes the supply of electric power to the electrical devices to off regardless of whether the in-vehicle functions are on or off.
(9) The control device according to above (1) to (8), wherein in a case where the supply of electric power to the electrical devices is on and the in-vehicle functions are on, when a lock operation of the vehicle from outside the vehicle is detected, the control unit maintains the supply of electric power to the electrical devices on and changes the in-vehicle functions to off.
(10) The control device according to above (1) to (9), wherein in a case where the supply of electric power to the electrical devices is off, when an operation of a push switch of the vehicle is detected, the control unit changes the supply of electric power to the electrical devices and the in-vehicle functions to on.
(11) The control device according to above (1) to (10), wherein the in-vehicle functions include at least one of an infotainment function, an air conditioning function, or an illumination function.
(12) The control device according to above (1) to (11), wherein
   the control unit includes: a power source management unit that manages on and off of the supply of electric power to the electrical devices; and a function management unit that manages on and off of the in-vehicle functions, and
   the function management unit sets the in-vehicle functions to off when the power source management unit sets the supply of electric power to the electrical devices to off.
(13) The control device according to above (1) to (11), wherein
   the control unit includes a power source management unit that manages on and off of the supply of electric power to the electrical devices; and a function management unit that manages on and off of the in-vehicle functions, and
   when changing on and off of the supply of electric power to the electrical devices and changing on and off of the in-vehicle functions, the power source management unit and the function management unit output signals indicating the changes in synchronization with each other.
(14) A control method of a vehicle, the control method comprising:
   controlling on and off of supply of electric power to at least one of electrical devices of the vehicle and on and off of at least one of in-vehicle functions whose operation is recognizable by an occupant of the vehicle, and
   in a case where the supply of electric power to the electrical devices is on and the in-vehicle functions are on, when a driver's door of the vehicle is detected as opened, changing the in-vehicle functions to off while maintaining the supply of electric power to the electrical devices on.
(15) A control program of a vehicle, the control program causing a computer to execute:
   controlling on and off of supply of electric power to at least one of electrical devices of the vehicle and on and off of at least one of in-vehicle functions whose operation is recognizable by an occupant of the vehicle, and
   in a case where the supply of electric power to the electrical devices is on and the in-vehicle functions are on, when a driver's door of the vehicle is detected as opened, changing the in-vehicle functions to off while maintaining the supply of electric power to the electrical devices on.

### BRIEF DESCRIPTION OF DRAWINGS

FIG. 1 is a schematic block diagram illustrating a configuration of a vehicle control system;
FIG. 2 is a block diagram schematically illustrating a configuration of an ECU;
FIG. 3 is a diagram illustrating a switching mode of a supply state of electric power to electrical devices in a power source management unit;
FIG. 4 is a diagram illustrating a switching mode of an operation state of in-vehicle functions in a function management unit;
FIG. 5 is a diagram illustrating a flow of processing of controlling electric power and functions when the supply state of electric power to the electrical devices is a power-off state;
FIG. 6 is a diagram illustrating a flow of processing of controlling electric power and functions when the supply state of electric power to the electrical devices is a vehicle power-on state and the operation state of the in-vehicle functions is a second viewing-off state;
FIG. 7 is a diagram illustrating a flow of processing of controlling electric power and functions when the supply state of electric power to the electrical devices is the vehicle power-on state and the operation state of the in-vehicle functions is a first viewing-on state;
FIG. 8 is a time chart of open and closed states of doors other than a driver's door;
FIG. 9 is a time chart similar to FIG. 8, illustrating open and closed states of doors other than the driver's door; and
FIG. 10 is a time chart similar to FIG. 8, illustrating open and closed states of doors other than the driver's door.

### DESCRIPTION OF EMBODIMENTS

Hereinafter, an embodiment will be described in detail with reference to the drawings. Note that in the following description, similar components are denoted by the same reference numerals.

### Configuration of Vehicle Control System

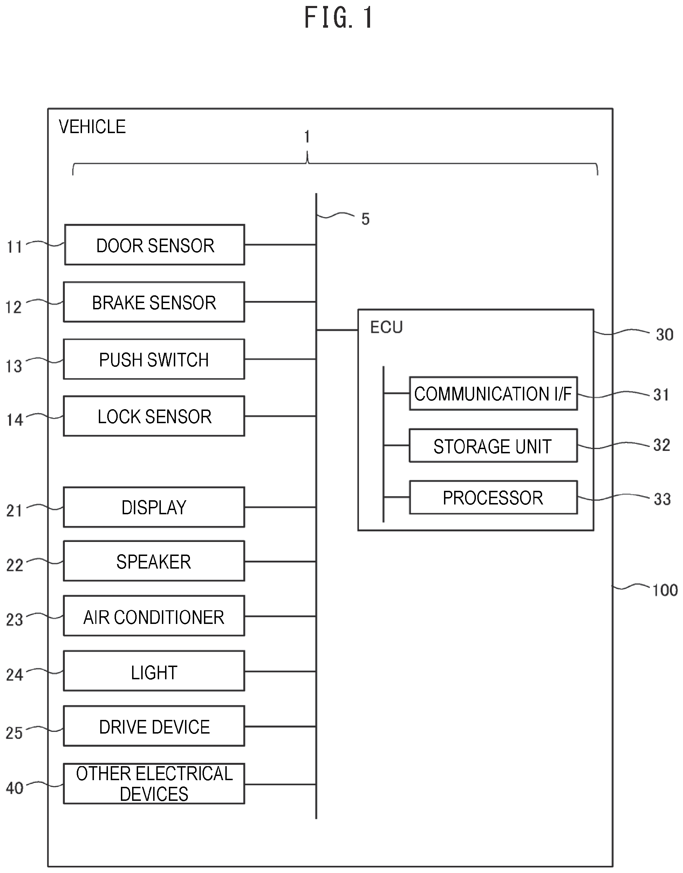

A configuration of a vehicle control system 1 including a control device according to one embodiment will be described with reference to FIG. 1. The control device controls on and off of the supply of electric power to electrical devices of a vehicle 100, and controls on and off of some of the in-vehicle functions recognizable by an occupant of the vehicle 100 as operating. FIG. 1 is a schematic block diagram illustrating a configuration of the vehicle control system 1.

The vehicle control system 1 is mounted on the vehicle 100. In the present embodiment, the vehicle 100 may be an electric vehicle (BEV, PHEV, HEV) driven at least partially by electric power, or may be a vehicle driven by an internal combustion engine.

As illustrated in FIG. 1, in the present embodiment, the vehicle control system 1 includes a plurality of electrical devices. The electrical devices include a door sensor 11, a brake sensor 12, a push switch 13, a lock sensor 14, a display 21, a speaker 22, an air conditioner (hereinafter referred to as "air conditioner") 23, a light 24, a drive device 25, an electronic control unit (hereinafter referred to as "ECU") 30, and other electrical devices 40. These electrical devices are communicably connected to each other via, for example, an in-vehicle network 5. The in-vehicle network 5 is a network conforming to a standard such as a controller area network (CAN). Alternatively, these electrical devices may be at least partially directly connected to each other via a signal line without the in-vehicle network 5 interposed therebetween.

The door sensor 11 is a sensor that detects opening and closing of each door of the vehicle 100. The door sensor 11 includes a sensor that detects opening and closing of a driver's door and a sensor that detects opening and closing of each of the doors other than the driver's door. The door sensor 11 outputs signals indicating open and closed states of each door to the ECU 30 via the in-vehicle network 5, for example, at each predetermined period. When the open and closed state of the door is changed (for example, when a closed door is opened), the door sensor 11 may transmit a signal indicating the change in the open and closed state to the ECU 30.

The brake sensor 12 is a sensor that detects the amount of depression of a brake pedal of the vehicle 100 by the driver. The brake sensor 12 transmits a signal indicating the amount of depression of the brake pedal to the ECU 30 via the in-vehicle network 5, for example, at each predetermined period. Information on the depression amount of the brake pedal is used for controlling driving of the vehicle 100 in addition to controlling the power supply of the vehicle 100 and the like.

The push switch 13 is a switch operated by the occupant. The push switch 13 is operated by the occupant to control the power supply of the vehicle 100. The push switch 13 is disposed in an instrument panel of the vehicle 100, for example. In particular, the push switch 13 is disposed at a position where the driver sitting on the driver's seat can operate the push switch 13. When the push switch 13 is operated (for example, when the push switch 13 is pressed), the push switch 13 transmits a push operation signal indicating that the push switch 13 is operated to the ECU 30 via the in-vehicle network 5, for example.

The lock sensor 14 is a sensor that detects a lock operation of the vehicle 100 by the user. In particular, in the present embodiment, the lock sensor 14 detects a lock operation by the user from outside the vehicle. For example, the lock sensor 14 performs an output indicating that a lock operation has been performed when a key of the vehicle 100 is inserted into a key cylinder provided in a door of the vehicle 100 and twisted, when approach of a hand of the user or the like is detected by a touch sensor provided in a door knob of the vehicle 100, or when a signal instructing to lock the vehicle 100 is received from an electronic key of the vehicle 100. The lock sensor 14 transmits a lock operation signal indicating that the lock operation has been performed to the ECU 30 via the in-vehicle network 5, for example.

The display 21 is a display device that displays an image. The display 21 is a display device of any type, such as a liquid crystal display or an organic EL display. The display 21 receives an image signal from the ECU 30 via the in-vehicle network 5 and displays an image in accordance with the image signal. The speaker 22 is a sound output device that outputs sound. The speaker 22 receives a sound signal from the ECU 30 via the in-vehicle network 5 and outputs sound in accordance with the sound signal. The display 21 and the speaker 22 implement an infotainment function of providing information and entertainment to the occupant. Note that the vehicle control system 1 may be provided with devices other than the display 21 and the speaker 22 as electrical devices that implement the infotainment function. In particular, in the present embodiment, the display 21 and the speaker 22 display an image and output a sound when receiving an image signal and a sound signal from the ECU 30 while electric power is supplied to the display 21 and the speaker 22. On the other hand, the display 21 and the speaker 22 do not display an image or output a sound even when an image signal and a sound signal are received from the ECU 30 while electric power is not supplied to the display 21 and the speaker 22.

The air conditioner 23 is an air conditioning control device that controls air conditioning inside the vehicle 100. The air conditioner 23 includes, for example, a compressor, a blower fan, and the like. The air conditioner 23 receives a control signal from the ECU 30 via the in-vehicle network 5, for example, and operates the compressor and the blower fan in accordance with the control signal. The air conditioner 23 implements an air conditioning function of controlling air conditioning inside the vehicle 100. When the air conditioner 23 receives a control signal from the ECU 30 while electric power is supplied, the air conditioner 23 controls operations of the compressor, the blower fan, and the like.

The light 24 is a lighting device that illuminates the outside or inside of the vehicle 100. The light 24 includes a headlight that illuminates the front of the vehicle and position lights provided at the front and rear of the vehicle 100. In addition, the light 24 includes an interior light that illuminates the inside of the vehicle 100. The light 24 receives a control signal from the ECU 30 via the in-vehicle network 5, for example, and operates the headlight, the position light, and the interior light in accordance with the control signal. The light 24 implements an illumination function of illuminating the outside or inside of the vehicle 100. When the light 24 receives a control signal from the ECU 30 while electric power is supplied, the light 24 controls operations of the headlight, the interior light, and the like.

The drive device 25 is an electrical device that constitutes a device for driving the vehicle 100. For example, when the vehicle 100 is driven by an internal combustion engine, the drive device 25 includes an ignition plug that ignites an air-fuel mixture in a combustion chamber, an injector that supplies the air-fuel mixture into the combustion chamber, and the like. In a case where the vehicle 100 is driven by an electric motor, the drive device 25 includes an electric motor, an inverter, a DC/DC converter, and the like. The drive device 25 receives a drive signal from the ECU 30 via the in-vehicle network 5, for example, and operates the internal combustion engine or the electric motor in accordance with the drive signal.

The other electrical devices 40 include electrical devices other than the door sensor 11, the brake sensor 12, the push switch 13, the lock sensor 14, the display 21, the speaker 22, the air conditioner 23, the light 24, the drive device 25, and the ECU 30. The other electrical devices 40 include any sensor, any actuator, and the like mounted on the vehicle 100. For example, the other electrical devices 40 include an in-vehicle camera that captures images of the front and rear of the vehicle 100, a millimeter-wave radar or a LiDAR that detects objects in front of and behind the vehicle 100, an automatic door opening and closing device in a case where the door of the vehicle 100 is a sliding door, a temperature sensor that detects the temperature of a battery, a water pump used for cooling water for the battery, and the like.

### Overview of ECU

The ECU 30 functions as a control device that executes a plurality of control functions in the vehicle 100. The ECU 30 functions as a control device that controls display on the display of the vehicle 100 and limits a control function on the basis of the power consumption amount. In the example illustrated in FIG. 1, the vehicle control system 1 includes a single ECU 30, but may include a plurality of ECUs 30 separate for each of the functions. The ECU 30 includes a communication interface 31, a storage unit 32, and a processor 33. Note that the communication interface 31, the storage unit 32, and the processor 33 may be separate circuits or may be configured as a single integrated circuit.

The communication interface 31 is a circuit for connecting the ECU 30 to the in-vehicle network 5. The communication interface 31 transmits signals received from the door sensor 11, the brake sensor 12, the push switch 13, and the lock sensor 14 to the processor 33. The communication interface 31 transmits signals output from the processor 33 to the display 21, the speaker 22, the air conditioner 23, the light 24, the drive device 25, and the other electrical devices 40.

The storage unit 32 stores data. The storage unit 32 includes at least one of a volatile semiconductor memory, a nonvolatile semiconductor memory, a hard disk drive (HDD), or a solid-state drive (SSD), for example. The storage unit 32 stores a program to be executed by the processor 33. Furthermore, the storage unit 32 stores data transmitted from various sensors.

The processor 33 includes one or a plurality of central processing units (CPUs) and peripheral circuits thereof. The processor 33 may further include another arithmetic circuit such as a logical arithmetic unit or a numerical arithmetic unit. The processor 33 executes the computer program stored in the storage unit 32.

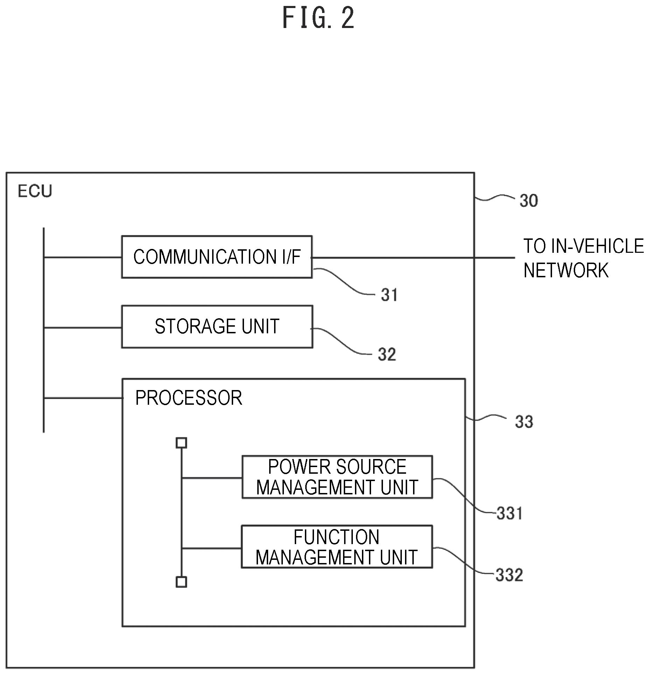

FIG. 2 is a block diagram schematically illustrating a configuration of the ECU 30. As illustrated in FIG. 2, the processor 33 includes a power source management unit 331 and a function management unit 332. These units included in the processor 33 are, for example, functional modules executed by the computer program operating on the processor 33. Alternatively, the units included in the processor 33 may be mounted to the ECU 30 as independent integrated circuits, microprocessors, or firmware. Note that the power source management unit 331 and the function management unit 332 function as control units that control on and off of the supply of electric power to the electrical devices of the vehicle 100 and on and off of the in-vehicle functions of the vehicle 100.

The power source management unit 331 manages on and off of the supply of electric power from a power supply to at least some of the electrical devices of the vehicle 100. In the present embodiment, the power source management unit 331 manages on and off of the supply of electric power to all the electrical devices of the vehicle 100. In particular, in the present embodiment, the power source management unit 331 manages on and off of the supply of electric power to the drive device 25 and on and off of the supply of electric power to the electrical devices (the door sensor 11, the display 21, and the like) other than the drive device 25.

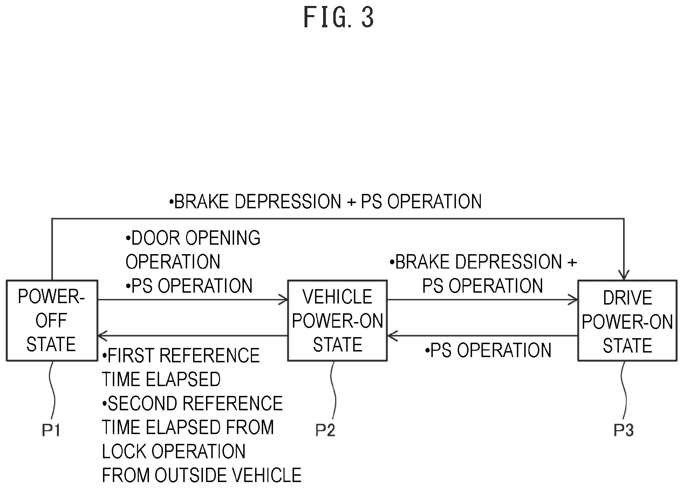

FIG. 3 is a diagram illustrating a switching mode of a supply state of electric power to the electrical devices in the power source management unit 331. As illustrated in FIG. 3, the power source management unit 331 switches the supply state of electric power to the electrical devices among three states including a power-off state P1, a vehicle power-on state P2, and a drive power-on state P3.

In the power-off state P1, the power source management unit 331 basically does not supply electric power to the electrical devices. Therefore, in the power-off state P1, the power source management unit 331 does not supply electric power to the display 21, the speaker 22, the air conditioner 23, the light 24, the drive device 25, the ECU 30, and the other electrical devices 40. To be specific, in the power-off state P1, the power source management unit 331 opens contacts of a relay circuit provided between the electrical devices and the battery, for example, to cut off the connection between the electrical devices and the battery. However, even in the power-off state P1, the power source management unit 331 supplies electric power to only a small number of electrical devices such as electrical devices related to security during parking and electrical devices for maintaining a standby state. Therefore, the power source management unit 331 supplies electric power to the door sensor 11, the brake sensor 12, the push switch 13, the lock sensor 14, and a part of the ECU 30, which are electrical devices for maintaining a standby state.

In the vehicle power-on state P2, the power source management unit 331 supplies electric power to the electrical devices except for the drive device 25. Therefore, in the vehicle power-on state P2, the power source management unit 331 supplies electric power to the display 21, the speaker 22, the air conditioner 23, the light 24, the ECU 30, and the other electrical devices 40 in addition to the door sensor 11, the brake sensor 12, the push switch 13, and the lock sensor 14. In particular, in the vehicle power-on state P2, the power source management unit 331 closes contacts of a relay circuit provided between the electrical devices other than the drive device 25 and the battery, for example, to connect these electrical devices and the battery. On the other hand, in the vehicle power-on state P2, the power source management unit 331 opens the contacts of a relay circuit provided between the drive device 25 and the battery, for example, to disconnect the drive device 25 from the battery.

In the drive power-on state P3, the power source management unit 331 supplies electric power to the electrical devices including the drive device 25. Therefore, in the drive power-on state P3, the power source management unit 331 supplies electric power to all the electrical devices including the drive device 25. Specifically, in the drive power-on state P3, the power source management unit 331 closes contacts of a relay circuit provided between all of the electrical devices including the drive device 25 and the battery, for example, to connect these electrical devices and the battery.

The power source management unit 331 switches the supply state of electric power to the electrical devices on the basis of signals from the door sensor 11, the brake sensor 12, the push switch (PS) 13, and the lock sensor 14. In a case where the supply state of electric power is the power-off state P1, when the door sensor 11 detects an opening operation of the driver's door or a door other than the driver's door, or the push switch 13 detects an operation of the push switch 13 by the occupant, the power source management unit 331 switches the supply state of electric power to the vehicle power-on state P2, and thus changes the supply of electric power to the electrical devices except for the drive device 25 to on.

In addition, in a case where the supply state of electric power is the power-off state P1, when the brake sensor 12 detects that the brake pedal is depressed and the push switch 13 detects an operation of the push switch 13 by the occupant, the power source management unit 331 switches the supply state of electric power to the drive power-on state P3, and thus changes the supply of electric power to the electrical devices including the drive device 25 to on. Moreover, in a case where the supply state of electric power is the vehicle power-on state P2, when the brake sensor 12 detects that the brake pedal is depressed and the push switch 13 detects an operation of the push switch 13 by the occupant, the power source management unit 331 switches the supply state of electric power to the drive power-on state P3, and thus changes the supply of electric power to the electrical devices including the drive device 25 to on.

Furthermore, in a case where the supply state of electric power is the drive power-on state P3, when the push switch 13 detects an operation of the push switch 13 by the occupant, the power source management unit 331 switches the supply state of electric power to the vehicle power-on state P2, and thus changes the supply of electric power to the drive device 25 to off. Moreover, in a case where the supply state of electric power is the vehicle power-on state P2, when a predetermined first reference time set in advance elapses after switching to the vehicle power-on state P2, or when a second reference time (a time shorter than the first reference time) elapses after the lock operation from outside the vehicle is detected by the lock sensor 14, the power source management unit 331 switches the supply state of electric power to the power-off state P1, and thus changes the supply of electric power to the electrical devices including the drive device 25 to off.

The function management unit 332 controls on and off of at least some of in-vehicle functions (hereinafter also simply referred to as "recognizable in-vehicle functions") whose operation is recognizable by the occupant of the vehicle 100. The in-vehicle functions recognizable by the occupant of the vehicle 100 as operating include, for example, an infotainment function, an air conditioning function, and an illumination function. Regarding the infotainment function, when the display 21 performs display or the speaker 22 outputs a sound, the occupant can recognize the operation of the infotainment function. In addition, regarding the air conditioning function, when air is blown from an air outlet, the occupant can recognize the operation of the air conditioning function. Furthermore, regarding the illumination function, when the headlight or the interior light is turned on, the occupant can recognize the operation of the illumination function. The in-vehicle functions recognizable by the occupant of the vehicle 100 as operating may include functions other than these infotainment function, air conditioning function, and illumination function.

In the present embodiment, when the infotainment function is turned on, an image is displayed on the display 21 and sound is output from the speaker 22. On the other hand, when the infotainment function is turned off, no image is displayed on the display 21 and no sound is output from the speaker 22 (however, a warning sound or the like may be output from a sound output device other than the speaker 22). When the air conditioning function is turned on, the air conditioner 23 (a compressor, a blower fan, and the like) is operated according to the room temperature, the target temperature, and the like in the vehicle 100. On the other hand, when the air conditioning function is turned off, the air conditioner is stopped. In addition, when the illumination function is turned on, the headlight, the interior light, and the like are turned on as necessary. On the other hand, when the illumination function is turned off, the headlight, the interior light, and the like are turned off.

On the other hand, the in-vehicle functions that are not recognizable by the occupant of the vehicle 100 as operating (hereinafter also simply referred to as "unrecognizable in-vehicle function") includes, for example, a safe exit assist function, a battery temperature adjustment function, and the like. The safe exit assist function is, for example, a function of sounding an alarm or stopping a door opening operation when another vehicle, a bicycle, or the like is detected diagonally behind the vehicle 100 by a millimeter wave radar at the back of the vehicle 100 during the door opening operation of the vehicle 100. The battery temperature adjustment function is a function of controlling the supply of cooling water to a battery and the like so that the temperature of the battery is maintained within an appropriate temperature range. The user cannot recognize the operations of the electrical devices (such as a radar sensor, a temperature sensor of a battery, and a water pump for cooling water) that implement these functions.

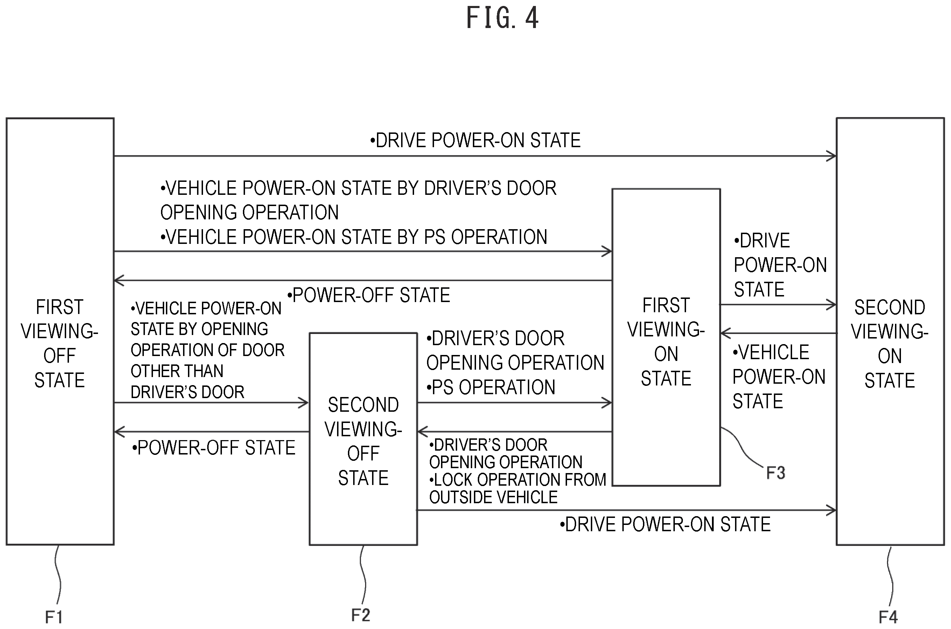

FIG. 4 is a diagram illustrating a switching mode of an operation state of the in-vehicle functions in the function management unit 332. As illustrated in FIG. 4, the function management unit 332 switches the operation state of the in-vehicle functions among four states including a first viewing-off state F1, a second viewing-off state F2, a first viewing-on state F3, and a second viewing-on state F4.

In the first viewing-off state F1 and the second viewing-off state F2, the function management unit 332 turns off the recognizable in-vehicle functions. Therefore, the function management unit 332 turns off the infotainment function, the air conditioning function, and the illumination function. On the other hand, in the first viewing-off state F1 and the second viewing-off state F2, the function management unit 332 turns on the unrecognizable in-vehicle functions. Therefore, the function management unit 332 turns on the safe exit assist function and the battery temperature adjustment function. Note that basically, when the supply state of electric power to the electrical devices is the power-off state P1, the function management unit 332 sets the operation state of the in-vehicle functions to the first viewing-off state F1. Therefore, when the operation state of the in-vehicle functions is set to the first viewing-off state F1 by the function management unit 332, basically, no electric power is supplied to the electrical devices. Therefore, in the first viewing-off state F1, since electric power is not supplied to the electrical devices that implement the unrecognizable in-vehicle functions, the unrecognizable in-vehicle functions are not substantially executed.

In the first viewing-on state F3 and the second viewing-on state F4, the function management unit 332 turns on both the recognizable in-vehicle functions and the unrecognizable in-vehicle functions. Therefore, the function management unit 332 turns on the infotainment function, the air conditioning function, and the illumination function, and turns on the safe exit assist function and the battery temperature adjustment function.

The function management unit 332 switches the operation state of the in-vehicle functions on the basis of the supply state of electric power to the electrical devices in the power source management unit 331 and signals from the door sensor 11, the push switch 13, and the lock sensor 14. In a case where the operation state of the in-vehicle functions is the first viewing-off state F1, that is, in a case where the supply state of electric power to the electrical devices is the power-off state P1, when the door sensor 11 detects an opening operation of a door other than the driver's door and, along with this, the supply state of electric power to the electrical devices is switched from the power-off state P1 to the vehicle power-on state P2, the function management unit 332 switches the operation state of the in-vehicle functions to the second viewing-off state F2. Therefore, the function management unit 332 maintains the recognizable in-vehicle functions in the off state. At this time, since the supply state of electric power to the electrical devices is switched to the vehicle power-on state P2, electric power is supplied to the electrical devices except for the drive device 25, but the recognizable in-vehicle functions are turned off.

In addition, in a case where the operation state of the in-vehicle functions is the first viewing-off state F 1, when the door sensor 11 detects an opening operation of the driver's door or the push switch 13 detects an operation of the push switch 13 and, along with this, the supply state of electric power to the electrical devices is switched from the power-off state P1 to the vehicle power-on state P2, the function management unit 332 switches the operation state of the in-vehicle functions to the first viewing-on state F3. Therefore, the function management unit 332 switches the recognizable in-vehicle functions to the on state. At this time, since the supply state of electric power to the electrical devices is switched to the vehicle power-on state P2, electric power is supplied to the electrical devices except for the drive device 25, and the recognizable in-vehicle functions are turned on.

In a case where the operation state of the in-vehicle functions is the first viewing-off state F1, when the supply state of electric power to the electrical devices is switched from the power-off state P1 to the drive power-on state P3, the function management unit 332 switches the operation state of the in-vehicle functions to the second viewing-on state F4. Therefore, the function management unit 332 switches the recognizable in-vehicle functions to the on state. At this time, since the supply state of electric power to the electrical devices is switched to the drive power-on state P3, electric power is supplied to the electrical devices including the drive device 25, and the recognizable in-vehicle functions are turned on.

Furthermore, in a case where the operation state of the in-vehicle functions is the second viewing-off state F2, when the door sensor 11 detects an opening operation of the driver's door or the push switch 13 detects an operation of the push switch 13, the function management unit 332 switches the operation state of the in-vehicle functions to the first viewing-on state F3. Therefore, the function management unit 332 switches the recognizable in-vehicle functions to the on state. At this time, since the supply state of electric power to the electrical devices is already set to the vehicle power-on state P2, electric power is supplied to the electrical devices except for the drive device 25, and the recognizable in-vehicle functions are turned on.

Moreover, in a case where the operation state of the in-vehicle functions is the second viewing-off state F2, when the supply state of electric power to the electrical devices is switched from the vehicle power-on state P2 to the drive power-on state P3, the function management unit 332 switches the operation state of the in-vehicle functions to the second viewing-on state F4. Therefore, the function management unit 332 switches the recognizable in-vehicle functions to the on state. At this time, since the supply state of electric power to the electrical devices is switched to the drive power-on state P3, electric power is supplied to the electrical devices including the drive device 25, and the recognizable in-vehicle functions are turned on.

In a case where the operation state of the in-vehicle functions is the first viewing-on state F3, when the supply state of electric power to the electrical devices is switched from the vehicle power-on state P2 to the drive power-on state P3, the function management unit 332 switches the operation state of the in-vehicle functions to the second viewing-on state F4. Therefore, the function management unit 332 maintains the recognizable in-vehicle functions in the on state. When the operation state of the in-vehicle functions is the second viewing-on state F4, the operation state of the in-vehicle functions is not switched even if an opening operation of the driver's door or a lock operation from outside the vehicle is detected. Moreover, in a case where the operation state of the in-vehicle functions is the second viewing-on state F4, when the supply state of electric power to the electrical devices is switched from the drive power-on state P3 to the vehicle power-on state P2, the function management unit 332 switches the operation state of the in-vehicle functions to the first viewing-on state F3. In this case, too, the function management unit 332 maintains the recognizable in-vehicle functions in the on state.

Furthermore, in a case where the operation state of the in-vehicle functions is the first viewing-on state F3, when the door sensor 11 detects an opening operation of the driver's door or the lock sensor 14 detects a lock operation from outside the vehicle, the function management unit 332 switches the operation state of the in-vehicle functions to the second viewing-off state F2. Therefore, the function management unit 332 switches the recognizable in-vehicle functions to the off state, and maintains the unrecognizable in-vehicle functions in the on state.

Moreover, in a case where the operation state of the in-vehicle functions is the first viewing-on state F3 or the second viewing-off state F2, when the supply state of electric power to the electrical devices is switched from the vehicle power-on state P2 to the power-off state P1, the function management unit 332 switches the operation state of the in-vehicle functions to the first viewing-off state F1. Therefore, the function management unit 332 turns off the recognizable in-vehicle functions.

Note that in the above embodiment, when the supply state of electric power to the electrical devices is the vehicle power-on state P2 and the operation state of the in-vehicle functions is the second viewing-off state F2, the supply of electric power to the electrical devices that implement the recognizable in-vehicle functions is turned on, but the recognizable in-vehicle functions are turned off. For example, at this time, although the supply of electric power to the display 21 and the speaker 22 is turned on, the screen display of the display 21 is not performed, and the audio output from the speaker 22 is not performed. However, the turning off of the recognizable in-vehicle functions may be performed by stopping the supply of electric power to the electrical devices that implement the recognizable in-vehicle functions. In this case, when the supply state of electric power to the electrical devices is the vehicle power-on state P2 and the operation state of the in-vehicle function is in the second viewing-off state F2, the supply of electric power to the electrical devices that implement the recognizable in-vehicle functions is stopped, and electric power is supplied to the electrical devices that implement the unrecognizable in-vehicle functions.

### Flowchart

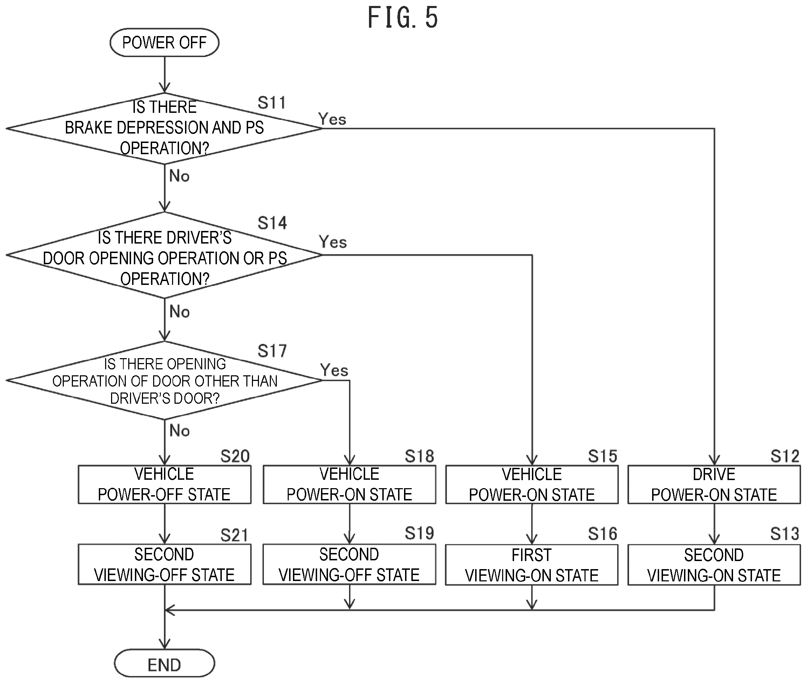

Next, a flow of control by the power source management unit 331 and the function management unit 332 (i.e., the control unit) will be described with reference to FIGS. 5 to 7. FIG. 5 is a diagram illustrating a flow of processing of controlling electric power and functions when the supply state of electric power to the electrical devices is the power-off state P1 (that is, when the operation state of the in-vehicle functions is the first viewing-off state F1). The processing illustrated in FIG. 5 is executed by the processor 33 (in particular, the power source management unit 331 and the function management unit 332) at regular time intervals.

When the processing is started, as illustrated in FIG. 5, the power source management unit 331 first determines whether the brake sensor 12 detects that the brake pedal is depressed and an operation of the push switch 13 is detected (step S11). If it is determined in step S11 that both the depression of the brake pedal and the operation of the push switch 13 are detected, the power source management unit 331 switches the supply state of electric power to the electrical devices to the drive power-on state P3 (step S12). The function management unit 332 switches the operation state of the in-vehicle functions to the second viewing-on state F4 in accordance with the switching of the supply state of electric power to the electrical devices to the drive power-on state P3 (step S13).

If it is determined in step S11 that at least one of the depression of the brake pedal or the operation of the push switch 13 is not detected, the power source management unit 331 determines whether an opening operation of the driver's door is detected by the door sensor 11 and whether an operation of the push switch 13 is detected (step S14). If it is determined in step S14 that an opening operation of the driver's door is detected or that an operation of the push switch 13 is detected, the power source management unit 331 switches the supply state of electric power to the electrical devices to the vehicle power-on state P2 (step S15). The function management unit 332 switches the operation state of the in-vehicle functions to the first viewing-on state F3 in accordance with the switching of the supply state of electric power to the electrical devices to the vehicle power-on state P2 (step S16).

On the other hand, if it is determined in step S14 that neither an opening operation of the driver's door nor an operation of the push switch 13 is detected, the power source management unit 331 determines whether an opening operation of a door other than the driver's door is detected by the door sensor 11 (step S17). If it is determined in step S17 that an opening operation of a door other than the driver's door is detected, the power source management unit 331 switches the supply state of electric power to the electrical devices to the vehicle power-on state P2 (step S18). The function management unit 332 switches the operation state of the in-vehicle functions to the second viewing-off state F2 in accordance with the switching of the supply state of electric power to the electrical devices to the vehicle power-on state P2 (step S19).

On the other hand, if it is determined in step S17 that an opening operation of a door other than the driver's door is not detected, the power source management unit 331 maintains the supply state of electric power to the electrical devices in the power-off state P1 (step S20). Accordingly, the function management unit 332 maintains the operation state of the in-vehicle functions in the first viewing-off state F1 (step S21).

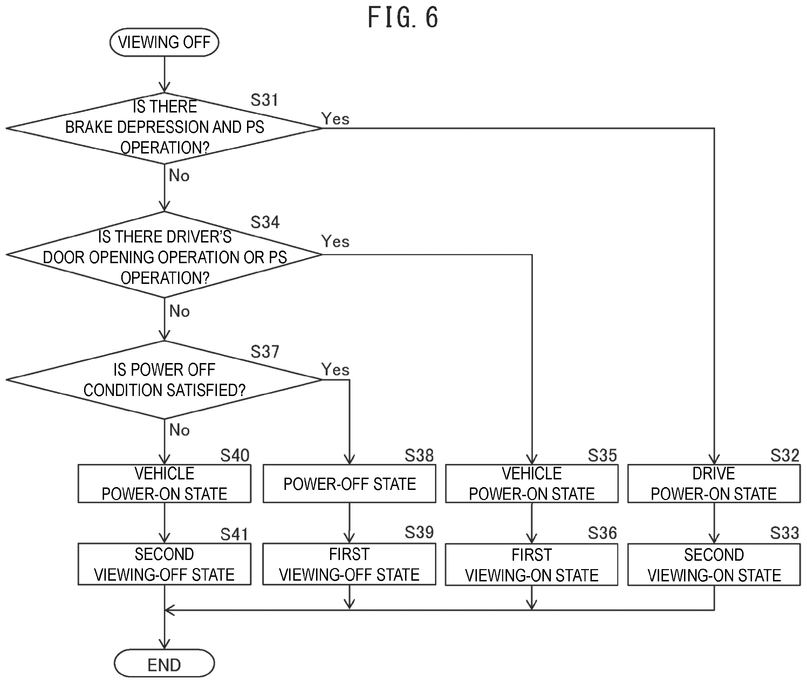

FIG. 6 is a diagram illustrating a flow of processing of controlling electric power and functions when the supply state of electric power to the electrical devices is the vehicle power-on state P2 and the operation state of the in-vehicle functions is the second viewing-off state F2. The processing illustrated in FIG. 6 is executed by the processor 33 (in particular, the power source management unit 331 and the function management unit 332) at regular time intervals. Steps S31 to S36 in Fig. 6 are similar to steps S11 to S16 in Fig. 5, and thus description thereof is omitted.

If it is determined in step S34 that neither an operation of opening of a driver's door nor an operation of the push switch 13 is detected, the power source management unit 331 determines whether a power-off condition is satisfied (step S37). Specifically, the power source management unit 331 determines whether the first reference time has elapsed after the supply state of electric power to the electrical devices is switched to the vehicle power-on state P2, and whether the second reference time has elapsed after the lock operation is detected. If it is determined in step S37 that the power-off condition is satisfied, the power source management unit 331 switches the supply state of electric power to the electrical devices to the power-off state P1 (step S38). The function management unit 332 switches the operation state of the in-vehicle functions to the first viewing-off state F1 in accordance with the switching of the supply state of electric power to the electrical devices to the power-off state P1 (step S39).

On the other hand, if it is determined in step S37 that the power-off condition is not satisfied, the power source management unit 331 maintains the supply state of electric power to the electrical devices in the vehicle power-on state P2 (step S40). The function management unit 332 maintains the operation state of the in-vehicle functions in the second viewing-off state F2 (step S41).

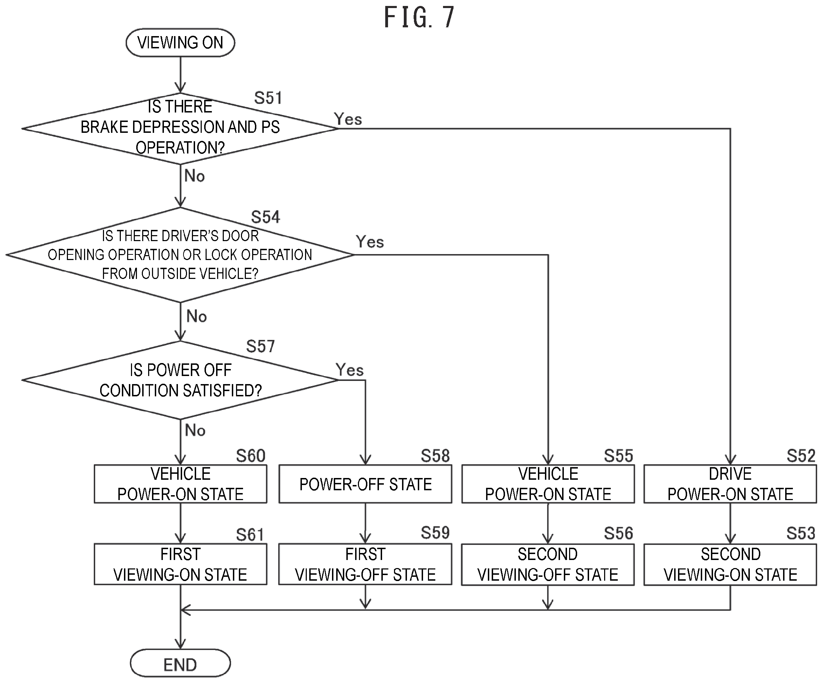

FIG. 7 is a diagram illustrating a flow of processing of controlling electric power and functions when the supply state of electric power to the electrical devices is the vehicle power-on state P2 and the operation state of the in-vehicle functions is the first viewing-on state F3. The processing illustrated in FIG. 7 is executed by the processor 33 (in particular, the power source management unit 331 and the function management unit 332) at regular time intervals. Note that steps S51 to S53 in FIG. 7 are similar to steps S11 to S13 in FIG. 5 and steps S57 to S59 in FIG. 7 are similar to steps S37 to S39 in FIG. 6, and thus the description thereof is omitted.

If it is determined in step S51 that at least one of the depression of the brake pedal or the operation of the push switch 13 is not detected, the power source management unit 331 determines whether an opening operation of a driver's door is detected by the door sensor 11 and whether a lock operation from outside the vehicle is detected by the lock sensor 14 (step S54). If it is determined in step S54 that an opening operation of a driver's door is detected or it is determined that a lock operation from outside the vehicle is detected, the power source management unit 331 maintains the supply state of electric power to the electrical devices in the vehicle power-on state P2 (step S55). The function management unit 332 switches the operation state of the in-vehicle functions to the second viewing-off state F2 (step S56). On the other hand, if it is determined in step S54 that neither an operation of opening a driver's door nor an operation of the push switch 13 is detected, the power source management unit 331 determines whether the power-off condition is satisfied (step S57).

If it is determined in step S57 that the power-off condition is not satisfied, the power source management unit 331 maintains the supply state of electric power to the electrical devices in the vehicle power-on state P2 (step S60). The function management unit 332 maintains the operation state of the in-vehicle functions in the first viewing-on state F3 (step S61).

### Effects

In the above embodiment, when the door sensor 11 detects that the driver's door of the vehicle 100 is opened in a case where the supply of electric power to the electrical devices is on (vehicle power-on state P2) and the in-vehicle functions are on (first viewing-on state F3), the recognizable in-vehicle functions are changed to off (second viewing-off state F2) while the supply of electric power to the electrical devices is maintained on (vehicle power-on state P2). As a result, when the driver's door is opened, the recognizable in-vehicle functions are turned off and the display 21 and the illumination are turned off, so that the user can recognize that the power supply control of the vehicle 100 is appropriately performed, and the convenience of the user is improved. In addition, when the driver's door is opened, the user often exits the vehicle 100, and since the in-vehicle functions are not unnecessarily maintained on, the electric power efficiency is improved. Furthermore, since the recognizable in-vehicle functions are turned off but the unrecognizable in-vehicle functions are maintained on, a function useful for the user at the time of exiting the vehicle, such as the safe exit assist function, is maintained on, and this also improves the convenience of the user.

In the above embodiment, the electrical devices to which electric power is supplied in the vehicle power-on state P2 include devices that implement recognizable in-vehicle functions. Therefore, when it is detected that the driver's door of the vehicle 100 is opened, the in-vehicle function implemented by the electrical device is turned off while electric power is supplied to the corresponding electrical device. This helps to suppress complexity in the configuration of the power supply mechanism (for example, the configuration of a relay circuit) due to an increase in the number of states switched by the power source management unit 331. Note that as described above, the turning off of the recognizable in-vehicle functions may be performed by stopping the supply of electric power to the electrical devices that implement the recognizable in-vehicle functions.

In addition, in the above embodiment, when the door sensor 11 detects that a door other than the driver's door of the vehicle 100 is opened in a case where the supply of electric power to the electrical devices is on (vehicle power-on state P2) and the recognizable in-vehicle functions are on (first viewing-on state F3), the recognizable in-vehicle functions are maintained on (first viewing-on state F3) while the supply of electric power to the electrical devices is maintained on (vehicle power-on state P2). When a door other than the driver's door is opened, there is a high possibility that the driver does not exit the vehicle, and the in-vehicle functions can be kept from being turned off even though the driver does not exit the vehicle. This can help to suppress a decrease in user convenience. Note that when it is detected that a door other than the driver's door is opened, the recognizable in-vehicle functions may be changed to off (second viewing-off state F2) while the supply of electric power to the electrical devices is maintained on (vehicle power-on state P2), similarly to when the driver's door is opened.

In the above embodiment, when the door sensor 11 detects that the driver's door of the vehicle 100 is opened in a case where the supply of electric power to the electrical devices is off (power-off state P1), the supply of electric power to the electrical devices and the recognizable in-vehicle functions are changed to on (vehicle power-on state P2 and first viewing-on state F3). In addition, when the door sensor 11 detects that the driver's door of the vehicle 100 is opened in a case where the supply of electric power to the electrical devices is on (vehicle power-on state P2) and the recognizable in-vehicle functions are off (second viewing-off state F2), the recognizable in-vehicle functions are changed to on (first viewing-on state F3) while the supply of electric power to the electrical devices is maintained on (vehicle power-on state P2). Thus, the supply of electric power and the in-vehicle functions are turned on only by opening the driver's door for the driver to get on the vehicle, and the convenience of the driver can be improved. Note that in these cases, the on and off of at least one of the supply of electric power to the electrical devices or the recognizable in-vehicle functions may be kept unchanged in response to the opening operation of the driver's door.

Furthermore, in the above embodiment, when the door sensor 11 detects that the door other than the driver's door of the vehicle 100 is opened in a case where the supply of electric power to the electrical devices is off (power-off state P1), the supply of electric power to the electrical devices is changed to on (vehicle power-on state P2) and the recognizable in-vehicle functions are maintained off (second viewing-off state F2). In addition, when the door sensor 11 detects that a door other than the driver's door of the vehicle 100 is opened in a case where the supply of electric power to the electrical devices is on (vehicle power-on state P2) and the recognizable in-vehicle functions are off (second viewing-off state F2), the supply of electric power to the electrical devices is maintained on (vehicle power-on state P2) and the recognizable in-vehicle functions are maintained off (second viewing-off state F2). When a door other than the driver's door is opened, the possibility that the driver gets on the vehicle is low, and therefore, an increase in the amount of power consumption due to the in-vehicle functions being turned on unnecessarily is suppressed. Note that in these cases, both the supply of electric power to the electrical devices and the recognizable in-vehicle functions may be turned on or may be maintained in the off state in response to the opening operation of a door other than the driver's door.

In the above embodiment, when the state in which the supply of electric power to the electrical devices is on and the supply of electric power to the drive device 25 that drives the vehicle 100 is stopped (vehicle power-on state P2) continues for the predetermined first reference time or longer, the supply of electric power to the electrical devices is changed to off (power-off state P1) regardless of whether the in-vehicle functions are on or off. This can help to suppress an unnecessary continuation of on state of the supply of electric power to the electrical devices. Note that the on and off of the electric power to the electrical devices may not be switched according to the length of the duration of the vehicle power-on state P2.

Furthermore, in the above embodiment, when a lock operation of the vehicle 100 from outside the vehicle 100 is detected in a case where the supply of electric power to the electrical devices is on (vehicle power-on state P2) and the recognizable in-vehicle functions are on (first viewing-on state F3), the recognizable in-vehicle functions are changed to off (second viewing-off state F2) while the supply of electric power to the electrical devices is maintained on (vehicle power-on state P2). Accordingly, when the lock operation is performed, the recognizable in-vehicle functions are turned off and the display 21 and the illumination are turned off, so that the user can recognize that the power supply control of the vehicle 100 is appropriately performed, and the convenience of the user is improved. In addition, when the lock operation is performed from outside the vehicle, the user is often exiting the vehicle 100, and since the in-vehicle functions are not unnecessarily maintained on, the electric power efficiency is improved. Furthermore, since the recognizable in-vehicle functions are turned off but the unrecognizable in-vehicle functions are maintained on, a function useful for the user at the time of exiting the vehicle, such as the safe exit assist function, is maintained on, and this also improves the convenience of the user. Note that in such a case, when a lock operation is detected, the supply of electric power to the electrical devices may be changed to off, or the recognizable in-vehicle functions may be maintained on.

In the above embodiment, when an operation of the push switch 13 of the vehicle 100 is detected in a case where the supply of electric power to the electrical devices is off (power-off state P1), the supply of electric power to the electrical devices and the recognizable in-vehicle functions are changed to on (vehicle power-on state P2 and first viewing-on state F3). Thus, when the driver intends to turn on the power, the supply of electric power and the in-vehicle functions are turned on, and the convenience of the driver can be improved. Note that in such a case, the on and off of at least one of the supply of electric power to the electrical devices or the recognizable in-vehicle functions may be kept unchanged in response to the operation of the push switch 13.

Furthermore, in the above embodiment, when the supply of electric power to the electrical devices is set to off (power-off state P1) by the power source management unit 331, the recognizable in-vehicle functions are set to off (first viewing-off state F1).

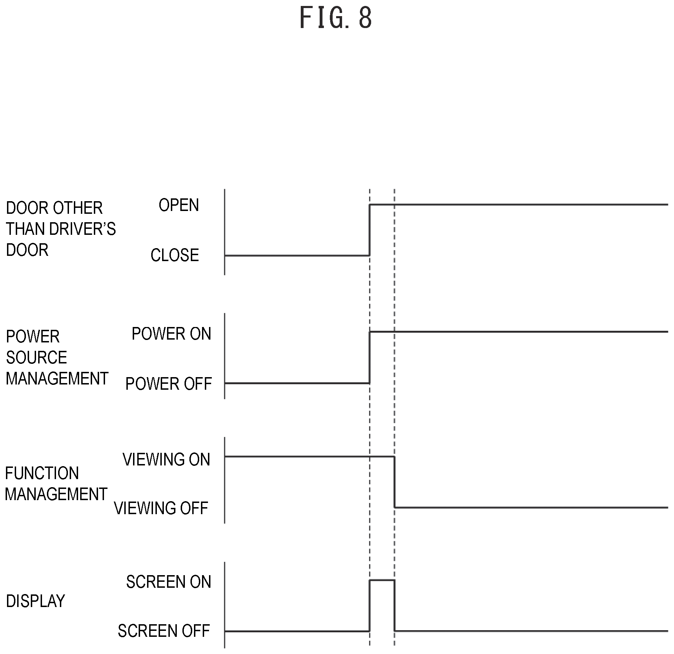

Here, a case is considered in which the recognizable in-vehicle functions are set to on when the supply of electric power to the electrical devices is set to off (power-off state P1) by the power source management unit 331. FIG. 8 is a time chart illustrating open and closed states of doors other than the driver's door, the supply state of electric power by the power source management unit, the state of the recognizable in-vehicle functions by the function management unit, and the state of the screen of the display 21 in such a case.

As illustrated in FIG. 8, when an opening operation of a door other than the driver's door is detected, the power source management unit 331 switches the supply state of electric power to the electrical devices from the power-off state P1 to the vehicle power-on state P2. At this time, since the function management unit 332 sets the recognizable in-vehicle functions to on (for example, the first viewing-on state F3), the screen display on the display 21 is performed. Immediately after that, the function management unit 332 switches the recognizable in-vehicle functions to off (second viewing-off state F2) in accordance with the switching of the supply state of electric power to the electrical devices from the power-off state P1 to the vehicle power-on state P2, and as a result, the screen display on the display 21 is stopped. Therefore, when the recognizable in-vehicle functions are set to on while the power source management unit 331 sets the supply of electric power to the electrical devices to off (power-off state P1), the recognizable in-vehicle function such as the display 21 is temporarily operated, which causes the occupant to feel uncomfortable.

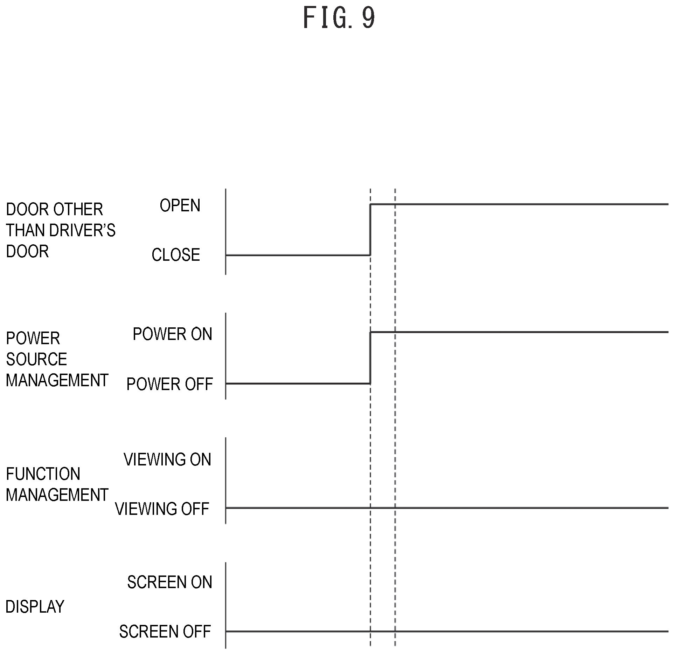

In contrast, in the present embodiment, when the supply of electric power to the electrical devices is set to off (power-off state P1) by the power source management unit 331, the recognizable in-vehicle functions are set to off (first viewing-off state F1). FIG. 9 is a time chart similar to FIG. 8, illustrating open and closed states of doors other than the driver's door, and the like, in such a case. As illustrated in FIG. 9, in the present embodiment, even when the power source management unit 331 switches the supply state of electric power to the electrical devices from the power-off state P1 to the vehicle power-on state P2, the function management unit 332 sets the operation state of the in-vehicle functions to the first viewing-off state F1, and thus the recognizable in-vehicle function such as the display 21 can be kept from being temporarily operated.

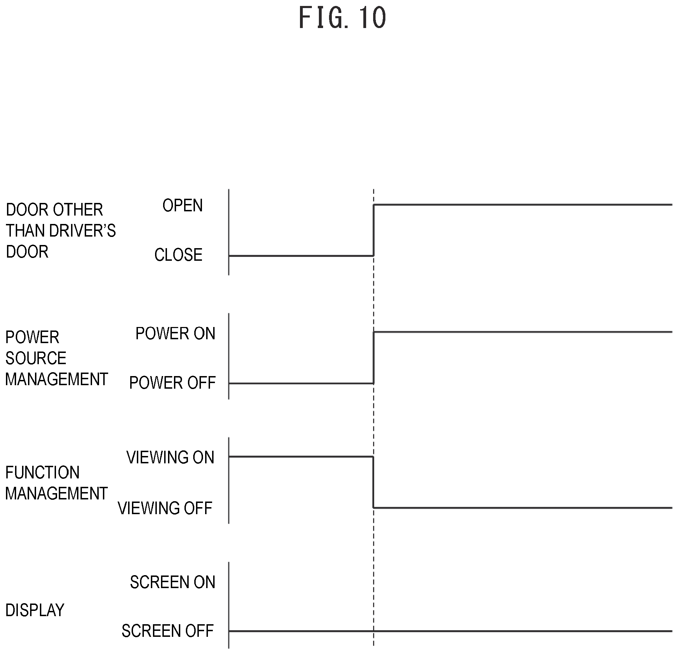

Note that in a case where the on and off of the supply of electric power to the electrical devices is changed and the on and off of the recognizable in-vehicle functions are changed, the power source management unit 331 and the function management unit 332 may be configured to output signals indicating the changes in synchronization with each other. FIG. 10 is a time chart similar to FIG. 8, illustrating open and closed states of doors other than the driver's door, and the like, in the case where the power source management unit 331 and the function management unit 332 are configured in this manner. As illustrated in FIG. 10, even in such a configuration, the recognizable in-vehicle function such as the display 21 can be kept from being temporarily activated.

Although the preferred embodiments according to the present disclosure have been described above, the present disclosure is not limited to these embodiments, and various modifications and changes can be made within the scope of the claims.

## Claims

1. A control device of a vehicle (100), the control device comprising:
a control unit (331, 332) configured to control on and off of supply of electric power to at least one of electrical devices of the vehicle (100) and on and off of at least one of in-vehicle functions whose operation is recognizable by an occupant of the vehicle (100), wherein
in a case where the supply of electric power to the electrical devices is on and the in-vehicle functions are on, when a driver's door of the vehicle (100) is detected as opened, the control unit (331, 332) changes the in-vehicle functions to off while maintaining the supply of electric power to the electrical devices on.

2. The control device according to claim 1, wherein the at least one of the electrical devices includes a device that implements the at least one of the in-vehicle functions.

3. The control device according to claim 1 or 2, wherein in a case where the supply of electric power to the electrical devices is on and the in-vehicle functions are on, when a door other than the driver's door of the vehicle (100) is detected as opened, the control unit (331, 332) maintains the supply of electric power to the electrical devices and the in-vehicle functions on.

4. The control device according to any one of claims 1 to 3, wherein in a case where the supply of electric power to the electrical devices is off, when the driver's door of the vehicle (100) is detected as opened, the control unit (331, 332) changes the supply of electric power to the electrical devices and the in-vehicle functions to on.

5. The control device according to any one of claims 1 to 4, wherein in a case where the supply of electric power to the electrical devices is off, when a door other than the driver's door of the vehicle (100) is detected as opened, the control unit (331, 332) changes the supply of electric power to the electrical devices to on and sets the in-vehicle functions off.

6. The control device according to any one of claims 1 to 5, wherein in a case where the supply of electric power to the electrical devices is on and the in-vehicle functions are off, when the driver's door of the vehicle (100) is detected as opened, the control unit (331, 332) maintains the supply of electric power to the electrical devices on and changes the in-vehicle functions to on.

7. The control device according to any one of claims 1 to 6, wherein in a case where the supply of electric power to the electrical devices is on and the in-vehicle functions are off, when a door other than the driver's door of the vehicle (100) is detected as opened, the control unit (331, 332) maintains the supply of electric power to the electrical devices on and maintains the in-vehicle functions off.

8. The control device according to any one of claims 1 to 7, wherein when a state in which the supply of electric power to the electrical devices is on and supply of electric power to a device that drives the vehicle (100) is stopped continues for a predetermined time or longer, the control unit (331, 332) changes the supply of electric power to the electrical devices to off regardless of whether the in-vehicle functions are on or off.

9. The control device according to any one of claims 1 to 8, wherein in a case where the supply of electric power to the electrical devices is on and the in-vehicle functions are on, when a lock operation of the vehicle (100) from outside the vehicle (100) is detected, the control unit (331, 332) maintains the supply of electric power to the electrical devices on and changes the in-vehicle functions to off.

10. The control device according to any one of claims 1 to 9, wherein in a case where the supply of electric power to the electrical devices is off, when an operation of a push switch (13) of the vehicle (100) is detected, the control unit (331, 332) changes the supply of electric power to the electrical devices and the in-vehicle functions to on.

11. The control device according to any one of claims 1 to 10, wherein the in-vehicle functions include at least one of an infotainment function, an air conditioning function, or an illumination function.

12. The control device according to any one of claims 1 to 11, wherein
the control unit (331, 332) includes: a power source management unit (331) that manages on and off of the supply of electric power to the electrical devices; and a function management unit (332) that manages on and off of the in-vehicle functions, and
the function management unit (332) sets the in-vehicle functions to off when the power source management unit (331) sets the supply of electric power to the electrical devices to off.

13. The control device according to any one of claims 1 to 11, wherein
the control unit (331, 332) includes a power source management unit (331) that manages on and off of the supply of electric power to the electrical devices; and a function management unit (332) that manages on and off of the in-vehicle functions, and
when changing on and off of the supply of electric power to the electrical devices and changing on and off of the in-vehicle functions, the power source management unit (331) and the function management unit (332) output signals indicating the changes in synchronization with each other.

14. A control method of a vehicle (100), the control method comprising:
controlling on and off of supply of electric power to at least one of electrical devices of the vehicle (100) and on and off of at least one of in-vehicle functions whose operation is recognizable by an occupant of the vehicle (100), and
in a case where the supply of electric power to the electrical devices is on and the in-vehicle functions are on, when a driver's door of the vehicle (100) is detected as opened, changing the in-vehicle functions to off while maintaining the supply of electric power to the electrical devices on.

15. A control program of a vehicle (100), the control program causing a computer to execute:
controlling on and off of supply of electric power to at least one of electrical devices of the vehicle (100) and on and off of at least one of in-vehicle functions whose operation is recognizable by an occupant of the vehicle (100), and
in a case where the supply of electric power to the electrical devices is on and the in-vehicle functions are on, when a driver's door of the vehicle (100) is detected as opened, changing the in-vehicle functions to off while maintaining the supply of electric power to the electrical devices on.
